# EUROPÄISCHE PATENTSCHRIFT

(11) **EP 0 638 271 B1**
(45) Veröffentlichungstag und Bekanntmachung des Hinweises auf die Patenterteilung: **23.10.1996**
(21) Anmeldenummer: 94810414.6
(22) Anmeldetag: 13.07.1994
(51) Int. Cl.: A47J 31/40

(54) **Kaffeemaschine mit Dosiervorrichtung**
Coffee machine with dosing device
Machine à café avec un dispositif de dosage

(30) Priorität: 11.08.1993 CH 2381/93
(43) Veröffentlichungstag der Anmeldung: 15.02.1995
(73) Patentinhaber: PRODIANA AG, CH-8854 Siebnen (CH)
(72) Erfinder: Schneeberger, Gérard, CH-8180 Bülach (CH)
(74) Vertreter: Feldmann, Clarence Paul

(56) Entgegenhaltungen:
- CH-A- 681 198
- DE-U- 9 202 015
- FR-A- 2 226 137
- FR-A- 2 425 220
- GB-A- 2 019 202
- US-A- 2 827 845

## Beschreibung

Die vorliegende Erfindung betrifft eine Vorrichtung zur Zubereitung von heissen Getränken durch Extraktion, insbesondere zur Zubereitung von Kaffee, mit mindestens einer Dosiervorrichtung für das Getränkepulver, einer Heisswasseraufbereitung und einer Wasserpumpe sowie Ausstossmittel zur Entfernung des gebrauchten Getränkepulvers aus einem beweglichen Extraktionsbecher, der auf einem beweglichen Halter befestigbar ist, welcher in einer Steuerbahn geführt ist und so den Extraktionsbecher in eine Lage befördert, in der er mit einem Extraktionskolben in Wirkverbindung tritt.

Eine Vorrichtung der eingangs genannten Art ist beispielsweise aus der CH-A-681198 bekannt. Die hier beschriebene Vorrichtung beschreibt eine besondere Art der Führung des Extraktionsbechers in einer horizontalen und einer vertikalen Bewegung, die zu einer besonders einfachen Konstruktion einer Kaffeemaschine führt. Bei den hier interessierenden Kaffeemaschinen handelt es sich um Maschinen vorwiegend für den Haushaltbedarf, die erheblich einfacher und kostengünstiger konzipiert sein müssen, als entsprechende Kaffeemaschinen für die Gastronomie.

Besonders aufwendige Maschinen für die Gastronomie erlauben es, die Stärke des durch Extraktion aufzubereitenden Getränkes zu variieren. Dies verlangt eine verstellbare Dosierung des zu verwendenden Getränkepulvers und eine Anpassung des Volumens des Extraktionsbechers, in dem die Relativposition des Extraktionsbechers und des in ihn eingreifenden Extraktionskolbens in Abhängigkeit des dosierten Getränkepulvers verstellbar ist. Bei den genannten, gewerblich eingesetzten Kaffeemaschinen erfolgt diese relative Verstellung von Extraktionsbecher und Extraktionskolben zueinander über komplexe elektronische Steuerungen und entsprechende hydraulische oder elektromotorische Verstelleinheiten. Die zur Verfügung stehenden Raumverhältnisse bei Haushaltmaschinen zur Zubereitung von heissen Getränken durch Extraktion erlauben solche Aufwendungen nicht.

Gewerbliche Kaffeemaschinen sind üblicherweise mit einem Mahlwerk ausgerüstet, das mit konstanter Geschwindigkeit angetrieben wird. Vom Mahlwerk aus gelangt der gemahlene Kaffee direkt in den Extraktionsbecher. Die Dosierung der Kaffeemenge, welche in den Extraktionsbecher gelangt, erfolgt dabei über eine Zeitsteuerung. Gesteuert wird in der Regel die Einschaltzeit für den Motor des Mahlwerks. Unter der bereits erwähnten Voraussetzung, dass der Motor konstante Drehzahl aufweist, lässt sich über die Veränderung der Einschaltzeit die gemahlene Menge an Kaffeepulver dosieren. Eine Uebertragung dieses Konzepts auf eine Haushaltkaffeemaschine ist aus technischen Gründen kaum möglich, da es aus Kostengründen nicht möglich ist, mit einem aufwendigen, drehzahlüberwachten Induktionsmotor zu arbeiten.

Entsprechend arbeitet man bei Vorrichtungen der eingangs genannten Art für den Haushaltbetrieb mit Dosiervorrichtungen, die das gemahlene Getränkepulver in einer festgelegten Menge an den Extraktionsbecher weitergeben. Aus der FR-A-1518759 ist eine Vorrichtung zur Dosierung von Kaffeepulver bekannt, bei welcher das Mahlwerk das gemahlene Getränkepulver direkt in eine Dosierkammer einträgt, welche ein druckempfindliches, elastisch verformbares Wandelement aufweist, an welchem ein Signalgeber angeordnet ist, der ein von der elastischen Verformung des Wandelementes abhängiges Signal erzeugt. Eine andere Variante einer solchen Dosiervorrichtung zeigt die EP-A-139964, bei der das Wandelement eine druckempfindliche, elastisch verformbare Membran ist, die beim Erreichen des gewünschten Füllgrades auf einen Signalgeber wirkt, der gleichzeitig einen verschwenkbaren Bodenteil entriegelt.

Auch die FR-A-2301214 zeigt eine solche Dosiervorrichtung, bei der das Mahlwerk das gemahlene Getränkepulver direkt in zwei unterschiedlich grosse Dosierkammern einträgt. Jede Dosierkammer hat auch wiederum eine bewegliche Wand, die auf einen Signalgeber einwirkt. Die Position der beweglichen Wände lassen sich in einem minimalen Bereich mittels Schraubenzieher und einer Kontermutter verstellen und sichern. Diese Einstellung ist jedoch eine Werkseinstellung, die schliesslich plombiert wird und auf die der Benützer der Vorrichtung keinen Einfluss nehmen kann.

Bei den bekannten Vorrichtungen zur Heissgetränke-Zubereitung. insbesondere Kaffee der eingangs genannten Art nehmen Extraktionsbecher und Extraktionskolben in der Position des Brühvorganges eine definierte, fixe Position zueinander ein.

Es ist jedoch bekannt, dass das Getränkepulver während des Extraktionsvorganges aufquillt. Entsprechend hat man auch vorgeschlagen, die Filterplatte im Extraktionsbecher unter Zwischenlage einer Feder beweglich zu lagern. Hierdurch kann die auftretende Bewegung beim Aufquillen des Getränkepulvers aufgefangen werden. Solche Lösungen zeigen beispielsweise die EP-A-486434 und DE-U-9214283.

Eine Vorrichtung gemäss Oberbegriff des Patentanspruches 1 ist aus der FR-A-22 26 137 bekannt. Hier erfolgt die Getränkepulverdosierung mittels einer Dosierkammer mit beweglicher Wand.

Keine der bekannten Vorrichtungen, die für Haushaltmaschinen konzipiert sind, zeigen jedoch die Möglichkeit auf, die Stärke des Extraktionsgetränkes durch gleichzeitige Variation der Menge des Getränkepulvers und des Aufnahmevolumens des Extraktionsbechers verändern zu können. Es ist folglich die Aufgabe der vorliegenden Erfindung, für dieses Problem eine möglichst einfache und kostengünstige Lösung vorzuschlagen.

Diese Aufgabe löst eine Vorrichtung der eingangs genannten Art mit den Merkmalen des kennzeichnenden Teiles des Patentanspruches 1.

Weitere erfindungsgemässe, vorteilhafte Ausführungen gehen aus den abhängigen Ansprüchen hervor und sind in der nachfolgenden Beschreibung eingehend erläutert. Die erfindungsgemässe Vorrichtung erlaubt insbesondere auch, dass mit zwei Dosiervorrichtungen gearbeitet werden kann, wobei die eine von einem Mahlwerk und die andere von einem Vorratsbehälter gespiesen werden kann.

In der Zeichnung ist ein bevorzugtes Ausführungsbeispiel des Erfindungsgegenstandes dargestellt und in der nachfolgenden Beschreibung erläutert. Es zeigt:
- Figur 1: Eine Teilansicht der erfindungsgemässen Vorrichtung, bei der der Extraktionsbecher, der Extraktionskolben und die verschiebbare Wand einer Dosiervorrichtung in verschiedenen Positionen dargestellt ist.
- Figur 2: eine Seitenansicht vom Extraktionsbecher und Extraktionskolben, wobei letzterer teilweise im Schnitt dargestellt ist;
- Figur 3: zeigt eine schematische Darstellung einer speziellen Dosiervorrichtung in einer Stellung zur Dosierung einer Mindestgetränkepulvermenge und
- Figur 4: dieselbe Darstellung in der Dosierung der maximalen Dosiermenge.
- Figur 5: zeigt wiederum eine schematische Darstellung der Vorrichtung nach Figur 4 im Schnitt entlang der Linie A-A. Und schliesslich zeigt
- Figur 6: den verschieblichen Dosierzylinder der Dosiervorrichtung nach den Figuren 3 bis 5 in perspektivischer Darstellung.

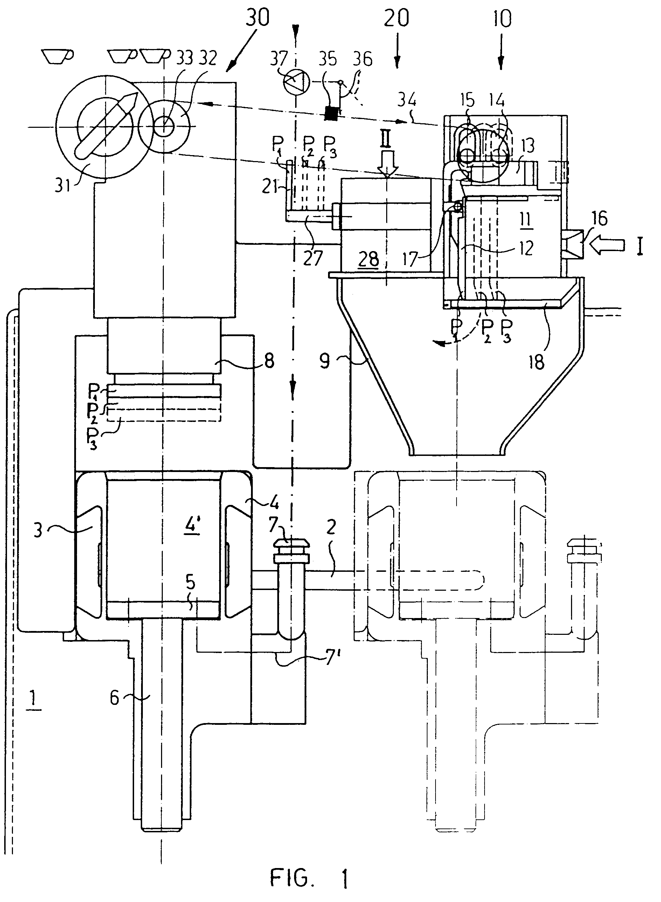

In der Figur 1 ist eine Vorrichtung zur Zubereitung von heissen Getränken durch Extraktion dargestellt, wie sie beispielsweise aus der CH-A-681198 bekannt ist. Solche Maschinen dienen vorwiegend der Herstellung von Kaffee. Ueblicherweise bezeichnet man solche Vorrichtungen als vollautomatische Kaffeemaschinen.

In der Figur 1 ist lediglich eine Teilansicht gezeichnet unter Weglassung des Gehäuses, des mechanischen Antriebes, des Mahlwerkes, des Wassertankes und der dazugehörigen Wasserpumpe und Wasserdurchlauferhitzers. Auch die zum Ausstoss des verbrauchten Kaffeepulvers erforderlichen Mittel sowie das Auffangbehältnis dafür sind in der Zeichnung nicht dargestellt. All dies sind bekannte Mittel, die in verschiedenen Ausführungsformen in diversen automatischen Kaffeemaschinen für den Haushaltgebrauch realisiert worden sind.

Mit der Bezugszahl 1 ist eine Grundplatte bezeichnet, auf die die hier wesentlichen Teile der Vorrichtung direkt oder indirekt montiert sind. In der Grundplatte ist eine Steuerbahn 2 eingelassen, die der Führung eines Halters 3 dient, in dem der Extraktionsbecher 4 gehalten ist. Der Extraktionsbecher ist hier schematisiert dargestellt, so dass man in die Brühkammer 4' des Extraktionsbechers 4 sehen kann. In diesem lagert eine bewegliche Siebplatte 5, an dem ein Ausstosser 6 angreift. Ueber einen steckbaren Anschlussstutzen 7 für das Brühwasser kann dieses via der strichliniert symbolisch dargestellten Leitung 7' durch die Siebplatte 5 in die Brühkammer 4' eindringen. Dabei durchströmt das heisse Wasser das auf der Siebplatte 5 liegende Getränkepulver. Die Brühkammer 4' des Extraktionsbechers 4 wird in der strichlinierten Position (in der Zeichnung rechts) mit einer dosierten Menge Kaffeepulver gefüllt und wird dann über die Steuerbahn 2 zur Position links unterhalb des Extraktionskolbens 8 geführt und danach aufwärts bewegt. Hierbei dringt der Extraktionskolben 8 in die Brühkammer 4' des Extraktionsbechers 4 ein. Dabei wird das im Extraktionsbecher befindliche Kaffeepulver auf ein vorbestimmtes Mass zusammengepresst.

Bei der Aufwärtsbewegung des Extraktionsbechers 4 wird der Anschlussstutzen 7 automatisch an die nicht dargestellte Brühwasseraufbereitung angekoppelt. Nun wird das heisse Wasser durch die Siebplatte und durch das komprimierte Getränkepulver aufwärts gepresst und tritt danach durch einen nicht dargestellten Ausguss aus.

In der rechten Hälfte der Zeichnung sind zwei Getränkepulverdosiervorrichtungen 10,20 gezeigt, die in diesem Beispiel beide die dosierte Menge Getränkepulver in einen Schütttrichter 9 entleeren. Aus dem Schütttrichter 9 gelangt das dosierte Getränkepulver in die Brühkammer 4' des strichliniert dargestellten Extraktionsbechers 4. Die erste Dosiervorrichtung, die gesamthaft mit 10 bezeichnet ist, wird seitlich von einem nicht dargestellten Mahlwerk gespiesen. Der mit I bezeichnete Teil soll diese Speisung symbolisieren. Ueber die Zuführung 16 gelangt das gemahlene Kaffeepulver vom Mahlwerk in die Dosierkammer 11. Die quaderförmige Dosierkammer 11 ist von fünf festen Seitenwänden umgeben, wovon zwei einen Winkel einschliessen, welche eine Bodenklappe 18 formen, sowie von einer beweglichen Wand 12 begrenzt. Mittels der beweglichen Wand 12 wird somit das Volumen der Dosierkammer 11 verstellt. Die bewegliche Wand selber ist wiederum an einem Schlitten 13 angeformt, der die eigentliche Verschiebebewegung durchführt. Voll ausgezeichnet ist in der Zeichnung die maximale Füllposition P₁, während die Position P₂ eine Zwischenposition und P₃ die Minimalposition darstellt. Diese Volumenänderungen bewegen sich in einer Grössenordnung, so dass die Dosierkammer 11 beispielsweise zwischen 5 und 15 Gramm gemahlenen Kaffee aufnehmen kann.

Hat die Dosierkammer den gewünschten vollständigen Füllgrad erreicht, so drückt die bewegliche Wand 14 auf einen ebenfalls am Schlitten 13 montierten Mikroschalter 17. Dieser gibt ein Steuersignal, welches einerseits bewirkt, dass das Mahlwerk abgestellt wird und beispielsweise über einen nicht dargestellten Elektromagneten die Bodenklappe 18 der Dosierkammer 11 geöffnet wird.

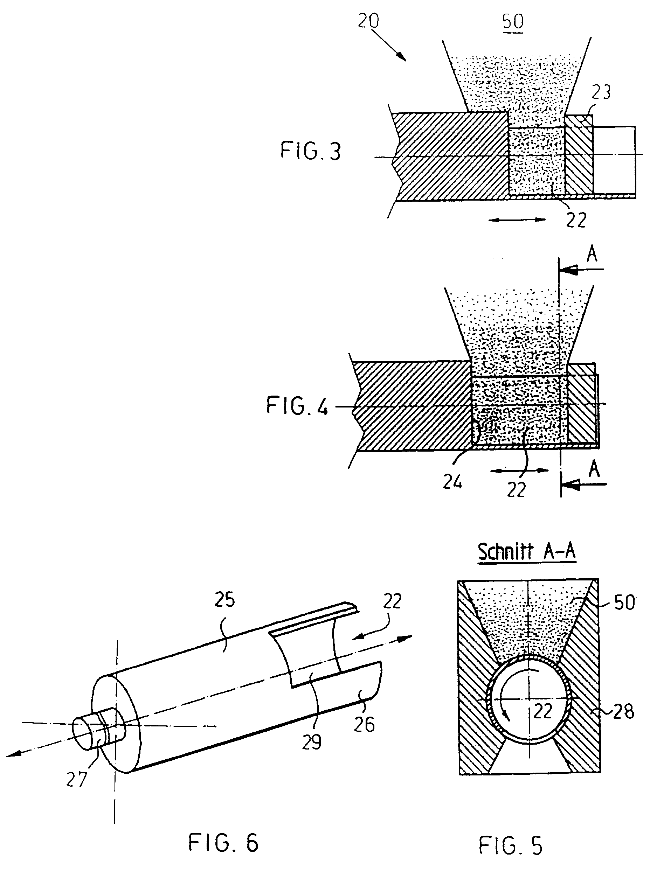

Wird die erfindungsgemässe Vorrichtung im wesentlichen nur zur Erstellung von Kaffee benützt, so kann diese einzige Dosiervorrichtung 10 genügen. Will man jedoch mit der erfindungsgemässen Vorrichtung sowohl koffeinhaltigen wie auch koffeinfreien Kaffee herstellen oder abwechslungsweise auch ein anderes Getränk, so ist eine zweite Dosiervorrichtung 20 sinnvoll. Am einfachsten lässt sich eine solche zweite Dosiervorrichtung 20 direkt neben der ersten Dosiervorrichtung 10 über denselben Schütttrichter 9 anordenen. Die zweite Dosiervorrichtung 20 hat einen besonderen Aufbau, der in den Figuren 3 bis 6 vereinfacht dargestellt ist. Die zweite Dosiervorrichtung 20 steht in direkter Wirkverbindung mit einem trichterförmigen Vorratsbehälter 50, der der Aufnahme von bereits gemahlenem Getränkepulver dient. Der wesentlichste Bestandteil der hier dargestellten Dosiervorrichtung besteht aus einem Verstellzylinder 25. Dieser ist in einem vorderen Bereich hohlzylindrisch gestaltet. Die vordere Stirnwand des hohlzylindrischen Teiles des Verstellzylinders 25 fehlt und wird durch die feste Wand 23, die selber wiederum ein Teil des Gehäuses 28 darstellt, gebildet. Eine Teilzylinderwand 26 lässt eine Oeffnung 29 frei. Der hohlzylindrische Teil des Verstellzylinders 25 wird von einer zylindrischen Stirnwand 24 begrenzt.

Der gesamte Verstellzylinder 25 ist sowohl achsial verschiebbar als auch drehbar im Gehäuse 28 gelagert. In der Position gemäss der Figur 3 dringt der geschlossene Zylinderteil relativ weit in das Gehäuse 28 ein, so dass zwischen der Stirnwand 24 des Verstellzylinders 25 und der fixen Wand 23 der verbleibende Freiraum, welcher die Dosierkammer 22 bildet, relativ klein ist. Die maximale Dosiermenge ist in der Figur 4 dargestellt. In der Lage gemäss den Figuren 3 und 4 fällt das gemahlene Getränkepulver in die Dosierkammer 22. Durch Rotation des Verstellzylinders 25 schiebt sich die Teilzylindermantelwand 26 vor der schmalen Auslassöffnung des trichterförmigen Vorratstanks 50. Hat sich der Verstellzylinder 25 schliesslich um 180° gedreht, so fällt das Getränkepulver aus der Dosierkammer 22 in den darunter angeordneten Schütttrichter 9. Gleichzeitig verhindert die Teilzylindermantelwand 26, dass weiteres Getränkepulver ausströmen kann. In dieser Position verbleibt der Verstellzylinder 25, bis von neuem eine bestimmte Menge Getränkepulver dosiert werden muss. In diesem Falle wird wiederum zuerst der Verstellzylinder 25 in der achsialen Richtung verschoben, um die Dosiermenge zu bestimmen, bevor der Verstellzylinder 25 wiederum so gedreht wird, bis die Oeffnung 29 in der Mantelwand 26 zum Vorratstank 50 hingerichtet ist.

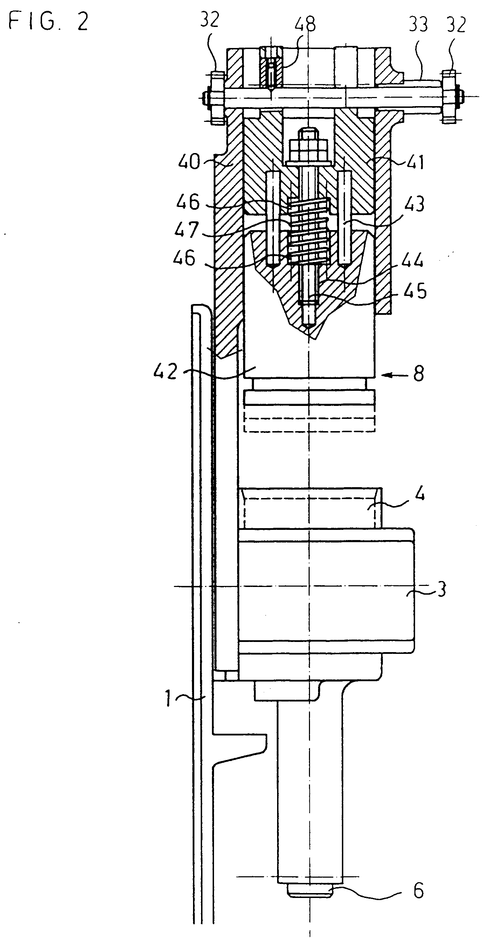

Figur 2 zeigt eine Seitenansicht der Vorrichtung nach Figur 1 unter Weglassung der Dosiervorrichtungen. Die Grundplatte ist wiederum mit 1 bezeichnet. Der Extraktionsbecher befindet sich wieder in einer unteren Position und ist wiederum vom Halter 3 gehalten. Der darüberliegende Extraktionskolben 8 ist teilweise geschnitten dargestellt.

Der Extraktionskolben 8 ist in einer Kolbenführung 40, die auf der Grundplatte 1 gehalten ist, geführt. Der Extraktionskolben 8 ist hier zweiteilig ausgeführt. Der untere Kolbenteil 42 dringt bei der Aufwärtsbewegung des Extraktionsbechers 4 in dessen Extraktionskammer 4' ein. Der obere Kolbenteil 41 lässt sich bezüglich der Kolbenführung 40 auf und ab bewegen. Beide Kolben sind miteinander verbunden mittels Führungsbolzen 43, die in entsprechenden, fluchtenden Bohrungen sowohl im oberen wie auch im unteren Kolbenteil 41,42 lagern. Zentrisch sind beide Kolbenteile zusätzlich über eine Verstellspindel 45 miteinander verbunden. Der untere Kolbenteil 42 hat entsprechend ein Gewindeloch 44, in dem die Verstellspindel 45 eingeschraubt ist. Der obere Kolbenteil 41 weist ein einfaches Durchgangsloch auf, durch welches die Verstellspindel 45 hindurchragt. Mittels Feststellmuttern lässt sich die Relativlage der beiden Kolbenteile 41,42 zueinander verstellen und sichern. Die Verstellspindel 45 wird von einer Druckfeder 47 konzentrisch umgeben, die in entsprechenden Aufnahmebohrungen 46 in beiden Kolbenteilen lagert. Die Druckfeder 47 ist so vorgespannt, dass sie durch den Druck beim Komprimieren des gemahlenen Kaffeepulvers beim Zusammenfahren von Extraktionsbecher und Extraktionskolben noch nicht zusammengedrückt wird. Erst beim effektiven Extraktionsvorgang, in dem das Wasser durch das Kaffeepulver gepresst wird, expandiert das Kaffeepulver, wodurch der Druck in der Brühkammer steigt, so dass nun der erhöhte Druck die Vorspannkraft der Druckfeder 47 übersteigt und der untere Kolbenteil 42 zum Kolbenteil 41 hin ausweichen kann.

Nach beendetem Brühvorgang verbleibt der Extraktionsbecher 4 noch kurzzeitig in der ursprünglichen Position des Brühvorganges, während die Wasserpumpe für das Brühwasser abgestellt ist und somit der Wasserdruck wegfällt. Das Restwasser im verbrauchten Kaffeepulver wird nun noch ausgepresst unter dem Druck der Druckfeder 47, so dass der untere Kolbenteil 42 wieder ein kleines Stück nach unten gleitet. Wird nun der Extraktionsbecher 4 mit dem Halter 3 nach unten weggezogen, so kann sich nun die Druckfeder 47 wieder bis zu ihrer Vorspannung entlasten. Bei dieser Methode ist sichergestellt, dass einerseits das verbrauchte Kaffeepulver kein Restwasser mehr enthält und andererseits, dass beim Auseinanderfahren von Extraktionskolben 8 und Extraktionsbecher 4 ein trokkener Kaffeefilterkuchen ausgestossen werden kann. Hierdurch ist sichergestellt, dass beim Ausstossen der Kaffeefilterkuchen nicht in sich zusammenfällt und die gesamte Maschine verschmutzt.

Dank dem vorbeschriebenen Aufbau der erfindungsgemässen Vorrichtung ist es nun möglich, eine äusserst einfache, kostengünstige und synchrone Verstellung einerseits des Dosiervolumens des Getränkepulvers als auch der Stellung des Extraktionskolbens, angepasst auf das Dosiervolumen des Getränkepulvers, zu realisieren. Selbstverständlich ist es dabei nicht zwingend, dass der Extraktionskolben 8 zweiteilig ausgeführt wird, doch erlaubt eine solche Ausführung eine erheblich grössere Variation des Dosiervolumens des Getränkepulvers.

Dies geht so weit, dass sogar mit einer so grossen Dosiermenge von Kaffeepulver gearbeitet werden kann, dass gleichzeitig zwei Tassen Kaffee herstellbar sind. Dies ist bisher mit Haushaltsmaschinen nicht realisiert worden.

Bezüglich der synchronen Verstellung der Dosiervorrichtungen und des Extraktionskolbens 8 wird nochmals auf die Figuren 1 und 2 Bezug genommen. Gesamthaft sind jene Mittel zur Verstellung als Transmissionsmittel 30 bezeichnet. Sie umfassen ein aussen am Gehäuse für den Benützer erkennbares Betätigungsorgan 31, hier dargestellt als Drehknopf, sowie einen Zahnriemen 34. Der Zahnriemen 34 läuft über ein Riemenrad 32, das auf einer Welle montiert ist, welche im Kolbenführungsgehäuse 40 gelagert ist. Auf dieser Welle ist auch ein Ritzel 33 angebracht, auf den das Betätigungsorgan 31 einwirkt. So kann mit einer 90°-Drehung des Betätigungsorganes 31 eine 180°-Drehung des Riemensrades 32 erzeugt werden. Durch die Drehung des Riemenrades 32 bewegt sich der Zahnriemen 34. Ein zweites Riemenrad ist auf einer Achse gelagert, die in der Grundplatte 1 befestigt ist. Dieses Riemenrad weist einen Mitnehmernocken 14 auf, der durch einen Mitnehmerbügel 15 hindurchragt. Der Mitnehmerbügel 15 ist am vorher beschriebenen Schlitten 13 angeordnet. Eine 180°-Drehung des Mitnehmernockens 14 um die Achse des zweiten Riemenrades bewegt somit den Schlitten 13 von der Minimalposition zur Maximalposition. Durch die Bewegung des Schlittens 13 wird folglich auch die bewegliche Wand 12 der ersten Dosiervorrichtung 10 verschoben. Von der Minimalposition P₃ bis zur Maximalposition P₁ ist jede beliebige Zwischenposition P₂ ebenfalls einstellbar. Dies bedeutet, dass ein Kaffee jeder beliebigen Stärke eingestellt werden kann.

Ist eine zweite Dosiervorrichtung 20 vorhanden, so lässt sich auch diese mittels dem Zahnriemen 34 in die gewünschte Dosierposition P₁ bis P₃ verschieben. Hierzu ist lediglich ein in der Zeichnung symbolisch dargestellter Mitnehmer 21 erforderlich, der einerseits fest mit dem Zahnriemen 34 und andererseits mit der Zug- und Rotationsachse 27 des Verstellzylinders 25 verbunden ist. Selbstverständlich sind auch hier andere Verstellmöglichkeiten unter Ausnutzung der Bewegung des Zahnriemens 34 möglich.

Bei der Betätigung des Betätigungsorganes 31 wird wie vorher besprochen über das Ritzel 33 die in der Kolbenführung lagernde Welle gedreht. Auf dieser Welle ist wie in Figur 2 ersichtlich ein Exzenter 48 verdrehgesichert befestigt. Durch die Drehung der Welle wird somit auch der Exzenter 48 verdreht, wobei dieser die beiden Kolbenteile 41 und 42 in der Kolbenführung 40 nach unten verschiebt. Somit besteht ein direkter Zusammenhang zwischen der Stellung des Betätigungsorganes 31, der verstellbaren Wand 12 beziehungsweise der verstellbaren zylindrischen Stirnwand 24 und der Höhe des Extraktionskolbens 8. Je kleiner das Dosiervolumen, beziehungsweise je kleiner die Dosierkammer 11 oder 22, je tiefer ist die Eindringtiefe des Extraktionskolben 8 in den Extraktionsbecher 4.

Diese Verstellmöglichkeit kann zusätzlich noch ausgenutzt werden, um die Wasserpumpe 37 anzusteuern. Hierzu kann beispielsweise auf dem Zahnriemen 34 ein Reiter 35 angebracht sein, der im Bereich der maximalen Dosiermenge auf einen Schalter 36 einwirkt, der an die Wasserpumpe ein Steuersignal gibt, um die doppelte Wassermenge zu fördern.

In einer besonders einfachen Ausführungsform der erfindungsgemässen Vorrichtung kann auch allein die zweite Dosiervorrichtung 20 und ein Vorratsbehälter 50 verwendet werden. In diesem Fall erübrigt sich dann ein Mahlwerk. Einer zweiten, etwas komfortablen Maschine kann lediglich die erste Dosiervorrichtung eingesetzt werden, die mit einem Mahlwerk zusammenwirkt. Somit wird nur Kaffee von frischgemahlenen Kaffeebohnen hergestellt. In der luxuriösesten Ausführung, wie hier dargestellt, lassen sich dann beide Dosiervorrichtungen einsetzen, womit alle Optionen erfüllbar sind. Die Verstellbarkeit des Extraktionskolbens 8 lässt sich selbstverständlich auch bei einem einteiligen Extraktionskolben realisieren. Selbstverständlich stellen die hier beschriebenen Transmissionsmittel, nämlich einerseits der Zahnriemen 34, die Riemenräder 32 sowie die Welle mit dem Exzenter 48 und dem Ritzel 33 lediglich eine bevorzugte Lösung dar. Beispielsweise liesse sich der Zahnriemen durch eine Stange ersetzen, die exzentrisch an einem Betätigungsrad angreift und direkt mit dem Schlitten 13 verbunden ist und das Betätigungsrad könnte via ein Winkelgetriebe oder einem Schneckengetriebe auf eine Spindel oder eine Zahnstange wirken, die auf den Extraktionskolben 8 wirkt. Der Grundgedanke der Erfindung besteht in der direkten Kupplung von dosierter Menge des Getränkepulvers und der gleichzeitigen, entsprechenden Verstellung des Extraktionskolbens 8.

## Patentansprüche

1. Vorrichtung zur Zubereitung von heissen Getränken durch Extraktion, insbesondere zur Zubereitung von Kaffee, mit mindestens einer Dosiervorrichtung (10, 20) für das Getränkepulver, einer Heisswasseraufbereitung und einer Wasserpumpe (37) sowie einem beweglichen Extraktionsbecher (4), der auf einem beweglichen Halter (3) befestigbar ist, welcher in einer Steuerbahn (2) geführt ist und so den Extraktionsbecher (4) in eine Lage befördert, in der er mit einem Extraktionskolben (8) in Wirkverbindung tritt, und wobei die mindestens eine Dosiervorrichtung (10, 20) eine verschiebliche Wand (12, 24) aufweist, dadurch gekennzeichnet, dass die Wand mechanisch mittels eines ein Betätigungsorgan (31) umfassenden Transmissionsmittels (30) beweglich ist, welches gleichzeitig den Extraktionskolben (8) in der Bewegungsrichtung des Extraktionsbechers (4) relativ zu letzterem verstellt, so dass durch die Bewegung der Transmissionsmittel (30) die Dosiermenge des Getränkepulvers und dessen Volumen zwischen Extraktionskolben (8) und -becher (4) in Abhängigkeit vom gemeinsamen Betätigungsorgan (31) variierbar ist.

2. Vorrichtung nach Anspruch 1, dadurch gekennzeichnet, dass das gemeinsame Betätigungsorgan (31) auf eine Welle wirkt, auf der einerseits ein Exzenter (48) sitzt, welcher den Kolben (8) verstellt und andererseits über ein Riemenrad (32) einen Zahnriemen (34) bewegt, die zusammen das Transmissionsmittel (30) bilden.

3. Vorrichtung nach Anspruch 1, dadurch gekennzeichnet, dass die mindestens eine Dosiervorrichtung (10) eine Dosierkammer (11) hat, deren bewegliche Wand (12) an einem Schlitten (13) läuft, auf den ein Abtastschalter (18) angeordnet ist.

4. Vorrichtung nach Anspruch 1, dadurch gekennzeichnet, dass die mindestens eine Dosiervorrichtung (20) aus einer zylindrischen Kammer (22) besteht, die von einer teilzylindrischen Mantelwand (26) und einer einstückig damit verbundenen beweglichen Zylinderstirnwand (24) sowie von einer ortsfesten Wand (23) begrenzt ist.

5. Vorrichtung nach Anspruch 1, dadurch gekennzeichnet, dass zwei Dosiervorrichtungen (10, 20) vorgesehen sind, wobei eine Dosiervorrichtung (10) von einem Mahlwerk gespiesen ist, während die andere Dosiervorrichtung (20) von einem Vorratsbehälter (50) speisbar ist und dass beide Dosiervorrichtungen in einen gemeinsamen Schütttrichter (9) münden.

6. Vorrichtung nach Anspruch 3 bis 5, dadurch gekennzeichnet, dass die beiden Dosiervorrichtungen (10, 20) unterschiedlicher Bauweise sind und jene Dosiervorrichtung (10) mit der verschieblichen Wand (12) von einem Mahlwerk und jene mit der verschieblichen Zylinderwand (24) von einem Vorratsbehälter (50) speisbar sind.

7. Vorrichtung nach Anspruch 1, dadurch gekennzeichnet, dass der höhenverstellbare Extraktionskolben (8) zweigeteilt ist und die beiden Kolbenteile (41, 42) geführt (43) und gefedert (47) miteinander verbunden sind.

8. Vorrichtung nach Anspruch 2, dadurch gekennzeichnet, dass das Transmissionsmittel ein Zahnriemen (34) umfasst, mittels dem mindestens ein Mitnehmer (14, 21) bewegbar ist, der mittel- oder unmittelbar an der verstellbaren Wand (12, 24) mindestens eine Dosiervorrichtung (10, 20) angreift.

9. Vorrichtung nach Anspruch 2, dadurch gekennzeichnet, dass das Transmissionsmittel (30) ein Stangen-Hebelantrieb ist.

10. Vorrichtung nach Anspruch 1, dadurch gekennzeichnet, dass über das Betätigungsorgan (31), im Bereich der maximalen Getränkepulverdosierung, auf einer Steuerung der Wasserpumpe (37) eine Einwirkung erfolgt, mittels der die Wasserfördermenge verdoppelbar ist.

11. Vorrichtung nach Anspruch 10, dadurch gekennzeichnet, dass am Transmissionsmittel (34) ein Reiter (35) angeordnet ist, der auf einen Steuerschalter (36) für die Wasserpumpe (37) wirkt.

## Claims

1. Apparatus for the preparation of hot beverages by extraction, particularly for the preparation of coffee, with at least one dosing device (10, 20) for the beverage powder, a hot water conditioner and a water pump (37), as well as a movable extraction cup (4), which can be fixed to a movable holder (3), which is guided in a control path (2) and consequently moves the extraction cup (4) into a position, where it comes into operative connection with an extraction plunger (8), and in which the at least one dosing device (10, 20) has a displaceable wall (12, 24), characterized in that the wall can be moved mechanically by means of a transmission means (30) incorporating an operating member (31) and which simultaneously adjusts the extraction plunger (8) in the movement direction of the extraction cup (4) relative to the latter, so that through the movement of the transmission means (30) it is possible to vary the dosing quantity of the beverage powder and its volume between the extraction plunger (8) and cup (4) as a function of the common operating member (31).

2. Apparatus according to claim 1, characterized in that the common operating member (31) acts on a shaft, on which is located on the one hand an eccentric (48), which adjusts the plunger (8), and on the other by means of a belt pulley (32) moves a toothed belt (34), which together form the transmission means (30).

3. Apparatus according to claim 1, characterized in that the at least one dosing device (20) has a dosing chamber (11), whose movable wall (12) runs on a slide (13), on which is located a switch (18).

4. Apparatus according to claim 1, characterized in that the at least one dosing device (20) comprises a cylindrical chamber (22), which is bounded by a part cylindrical jacket wall (26) and a movable cylinder end wall (24) connected in one piece thereto, as well as a fixed wall (23).

5. Apparatus according to claim 1, characterized in that two dosing devices (10, 20) are provided, one dosing device (10) being supplied by a grinder, whilst the other dosing device (20) can be supplied by a storage container (50), and that both dosing devices issue into a common feed funnel (9).

6. Apparatus according to claims 3 to 5, characterized in that the two dosing devices (10, 20) have different constructions and the dosing device (10) with the displaceable wall (12) can be supplied by a grinder, whilst that with the displaceable cylinder wall (24) is supplied by a storage container (50).

7. Apparatus according to claim 1, characterized in that the vertically adjustable extraction plunger (8) is in two parts and the two plunger parts are interconnected in guided (43) and sprung (47) manner.

8. Apparatus according to claim 2, characterized in that the transmission means incorporate a toothed belt (34), by means of which at least one driver (14, 21) can be moved, which acts directly or indirectly on the adjustable wall (12, 24) of at least one dosing device (10, 20).

9. Apparatus according to claim 2, characterized in that the transmission means (30) is a rod-lever drive.

10. Apparatus according to claim 1, characterized in that by means of the operating member (31), in the vicinity of the maximum beverage powder dosing, an action takes place on a control of the water pump (37), so as to double the water supply quantity.

11. Apparatus according to claim 10, characterized in that a slider (35) is located on the transmission means (34) and acts on a control switch (36) for the water pump (37).

## Revendications

1. Dispositif pour préparer des boissons chaudes par percolation, et en particulier pour préparer du café, comprenant au moins un dispositif de dosage (10, 20) pour la poudre qui produit la boisson, une préparation de l'eau chaude et une pompe à eau (37), ainsi qu'un godet de percolation mobile (4) qui peut être fixé sur un support mobile (3), ce dernier étant guidé sur une voie de commande (2) en amenant ainsi le godet de percolation (4) dans une position dans laquelle il entre en liaison fonctionnelle avec un piston de percolation (8), cependant que le ou les dispositifs de dosage (10, 20) présentent une paroi coulissante (12, 24), caractérisé par le fait que la paroi est mobile mécaniquement à l'aide d'un moyen de transmission (30) qui comprend un organe d'actionnement (31) et qui déplace en même temps le piston de percolation (8) dans la direction de déplacement du godet de percolation (4) par rapport à ce dernier, de sorte que, grâce au déplacement du moyen de transmission (30), on peut faire varier la quantité dosée de la, poudre qui produit la boisson et son volume entre le piston de percolation (8) et le godet de percolation (4) en fonction de l'organe d'actionnement commun (31).

2. Dispositif selon la revendication 1, caractérisé par le fait que l'organe d'actionnement commun (31) agit sur un arbre sur lequel est monté un excentrique (48) qui déplace le piston (8), d'une part, et que cet arbre déplace d'autre part une courroie crantée (34) par l'intermédiaire d'une poulie à courroie (32), ces organes composant ensemble le moyen de transmission (30).

3. Dispositif selon la revendication 1, caractérisé par le fait que le ou les dispositifs de dosage (10) comportent une chambre de dosage (11) dont la paroi mobile (12) se déplace sur un chariot (13) sur lequel est disposé un interrupteur à contact (18).

4. Dispositif selon la revendication 1, caractérisé par le fait que le ou les dispositifs de dosage (20) sont constitués par une chambre cylindrique (22) qui est délimitée par une paroi latérale en forme de partie de cylindre (26) et par une paroi frontale mobile (24) du cylindre qui est reliée à celle-ci d'un seul tenant, ainsi que par une paroi fixe (23).

5. Dispositif selon la revendication 1, caractérisé par le fait qu'il est prévu deux dispositifs de dosage (10, 20), un dispositif de dosage (10) étant alimenté par un moulin, tandis que l'autre dispositif de dosage (20) peut être alimenté par un récipient de stockage (50), et par le fait que les deux dispositifs de dosage débouchent dans une trémie de déversement commune (9).

6. Dispositif selon l'une des revendications 3 à 5, caractérisé par le fait que les deux dispositifs de dosage (10, 20) sont d'une construction différente, que le dispositif de dosage (10) qui est pourvu de la paroi mobile (12) peut être alimenté par un moulin, et que celui qui comprend la paroi cylindrique coulissante (24) peut l'être par un récipient de stockage (50).

7. Dispositif selon la revendication 1, caractérisé par le fait que le piston de percolation (8) qui peut être déplacé en hauteur est divisé en deux parties, et que les deux parties (41, 42) du piston sont reliées entre elles en étant guidées (43) et soumises à l'action d'un ressort (47).

8. Dispositif selon la revendication 2, caractérisé par le fait que le moyen de transmission comprend une courroie crantée (34) au moyen de laquelle peut être déplacé au moins un organe d'entraînement (14, 21) qui vient en prise directement ou indirectement sur la paroi pouvant être déplacée (12, 24) d'au moins un dispositif de dosage (10, 20).

9. Dispositif selon la revendication 2, caractérisé par le fait que le moyen de transmission (30) est un mécanisme à tringle et à levier.

10. Dispositif selon la revendication 1, caractérisé par le fait que, par l'intermédiaire de l'organe d'actionnement (31), un effet est produit sur une commande de la pompe à eau (37) dans la région du dosage maximal de la poudre qui produit la boisson, effet au moyen duquel la quantité d'eau déplacée peut être doublée.

11. Dispositif selon la revendication 10, caractérisé par le fait qu'est disposé sur le moyen de transmission (34) un cavalier (35) qui agit sur un commutateur de commande (36) destiné à la pompe à eau (37).
